# EUROPEAN PATENT APPLICATION

(11) **EP 1 148 619 A2**
(43) Date of publication of application: **24.10.2001**
(21) Application number: 01303109.1
(22) Date of filing: 02.04.2001
(51) Int. Cl.: H02K 5/173, H02K 15/14, F16C 25/06, F16C 35/063

(54) **Motor with a pre-loaded compound bearing that is during assembly**

(30) Priority: 19.04.2000 JP 2000117815
(71) Applicant: Minebea Kabushiki Kaisha, Kitasaku-gun, Nagano-ken (JP)
(72) Inventor: Obara, Rikuro, Kitasaku-gun, Nagano-ken (JP)
(74) Representative: Johnstone, Douglas Ian

(57) **Abstract**

A spindle motor for office automation equipment such as a computer hard disc drive including a compound bearing with a stepped shaft (5) mounted in a sleeve (10) having two raceways (11, 12) formed in its inner surface by means of a first row of balls (13) which run between one of the sleeve raceways (11) and a raceway (6) formed around a larger shaft portion and a second row of balls (14) which run between the other sleeve raceway (12) and a raceway (7) formed around an inner ring (8) which is mounted on a smaller diameter shaft portion. The ring (8) is adhered to the shaft (5) while being axially biased to reduce bearing play. The shaft (5) may then be connected to a motor base (2) or a rotor hub (9). Alternatively or in addition the sleeve (10) may be connected to these components.

## Description

The present invention relates to a motor with a compound bearing for a so-called OA (Office Automation) device such as a hard disk drive device or a peripheral device for a computer.

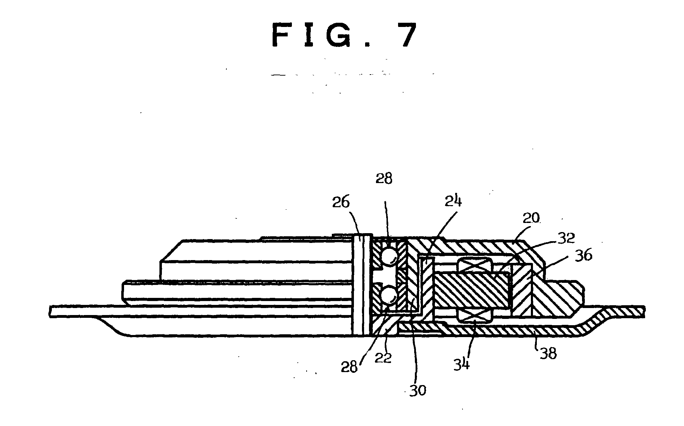

A prior art motor, for example a spindle motor for an OA device including a hub 20 constituting a rotor, a base 22, a yoke holder 24, and a spindle shaft 26 is shown in Fig. 7. The hub is rotatably journalled around the spindle shaft through a bearing apparatus including the spindle shaft, a pair of ball bearing 28 having inner and outer rings, and a sleeve 30 fitted over the outer rings of the ball bearings. Although in the structure as shown in Fig. 7 the sleeve and hub are formed as one part, each of the spindle shaft, ball bearings, and the sleeve forming the bearing apparatus are formed as independent single elements respectively. The motor also includes a stator yoke 32 on which coils 34 are wound and magnets 36 which are mounted on an inwardly facing surface of the hub and confront the stator yoke. The base is mounted in a hole in a flange member 38.

As can be seen from above, the motor of the prior art includes many parts, and the assembling operation of these parts should be made on the side of the manufacturer of the motor (motor maker) when the motor is manufactured. Such assembling operation requires many steps for fabricating the motor, and the cost for manufacturing the motor is relatively high.

Further, in the case of the motor of the prior art, the precision of the rotational run-out or play of the shaft should be compensated for during the fabrication of the motor. It is difficult to enhance the precision of the rotational run-out.

Additionally in the motor of the prior art, the size of the shaft is limited by the inner diameter of the inner rings, so that the diameter of the shaft is reduced when miniaturizing the motor. When the diameter of the shaft is reduced, the rigidity and the strength of the shaft is reduced, and the resistance against impact or resonance is impaired.

Accordingly the object of the present invention is to provide a bearing apparatus as a completed product assembled with high precision by the bearing manufacturer (bearing maker). For the motor maker, it is only necessary to assemble the finished product with the motor, and the process for assembling the bearing apparatus is unnecessary. It is therefore possible to reduce the number of steps required for assembling a motor with compound bearings. Thus obtained compound bearing is higher in its precision of the rotational run-out. The cost for manufacturing can be reduced. Further, the diameter of the shaft can be enlarged to provide a motor or spindle motor of high resistance against impact or resonance.

These and other objects are achieved by a motor with a compound bearing for an OA device in accordance with the first embodiment of the present invention having a spindle shaft assembled within a sleeve of the bearing apparatus through balls, the bearing comprising; the spindle shaft comprising a stepped shaft including a reduced diameter portion and a larger diameter portion, an inner ring slidably fitted over the reduced diameter portion of the spindle shaft, a plurality of balls interposed between a raceway formed on the outer peripheral surface of the inner ring and a raceway formed on the inner surface of the sleeve, and a plurality of balls interposed between a raceway formed on the outer peripheral surface of the larger diameter portion of the spindle shaft and a raceway formed on the inner peripheral surface of the sleeve, wherein the bearing is completed as the compound bearing by fixedly adhering the inner ring on the reduced diameter portion of the spindle shaft while applying to the balls an appropriate pre-load through the inner ring, and wherein the motor with the compound bearing is provided by connecting the sleeve of the compound ball bearing with the hub constituting the rotor, possibly integrally.

A motor with a compound bearing for an OA device in accordance with the second embodiment has a spindle shaft assembled within a sleeve of the bearing apparatus through balls, the bearing comprising; the spindle shaft comprising a stepped shaft including a reduced diameter portion and a larger diameter portion, an inner ring slidably fitted over the reduced diameter portion of the spindle shaft, a plurality of balls interposed between a raceway formed on the outer peripheral surface of the inner ring and a raceway formed on the inner surface of the sleeve, and a plurality of balls interposed between a raceway formed on the outer peripheral surface of the larger diameter portion of the spindle shaft and a raceway formed on the inner peripheral surface of the sleeve, wherein the bearing is completed as the compound bearing by fixedly adhering the inner ring on the reduced diameter portion of the spindle shaft while applying to the balls an appropriate pre-load through the inner ring, and wherein the motor with the compound bearing is provided by connecting the spindle shaft of the compound ball bearing with the hub constituting the rotor, possibly integrally.

A motor with a compound bearing for an OA device in accordance with the third embodiment has a spindle shaft assembled within a sleeve of the bearing apparatus through balls, the bearing comprising; the spindle shaft comprising a stepped shaft including a reduced diameter portion and a larger diameter portion, an inner ring slidably fitted over the reduced diameter portion of the spindle shaft, a plurality of balls interposed between a raceway formed on the outer peripheral surface of the inner ring and a raceway formed on the inner surface of the sleeve, and a plurality of balls interposed between a raceway formed on the outer peripheral surface of the larger diameter portion of the spindle shaft and a raceway formed on the inner peripheral surface of the sleeve, wherein the bearing is completed as the compound bearing by fixedly adhering the inner ring on the reduced diameter portion of the spindle shaft while applying to the balls an appropriate pre-load through the inner ring, and wherein the motor with the compound bearing is provided by connecting the sleeve of the compound ball bearing with the base, possibly integrally.

A motor with a compound bearing for an OA device in accordance with the fourth embodiment has a spindle shaft assembled within a sleeve of the bearing apparatus through balls, the bearing comprising; the spindle shaft comprising a stepped shaft including a reduced diameter portion and a larger diameter portion, an inner ring slidably fitted. over the reduced diameter portion of the spindle shaft, a plurality of balls interposed between a raceway formed on the outer peripheral surface of the inner ring and a raceway formed on the inner surface of the sleeve, and a plurality of balls interposed between a raceway formed on the outer peripheral surface of the larger diameter portion of the spindle shaft and a raceway formed on the inner peripheral surface of the sleeve, wherein the bearing is completed as the compound bearing by fixedly adhering the inner ring on the reduced diameter portion of the spindle shaft while applying to the balls an appropriate pre-load through the inner ring, and wherein the motor with the compound bearing is provided by connecting the sleeve of the compound ball bearing with the base, possibly integrally which base is formed integrally with a stator yoke holder.

A motor with a compound bearing for an OA device in accordance with the fifth embodiment has a spindle shaft assembled within a sleeve of the bearing apparatus through balls, the bearing comprising; the spindle shaft formed of a stepped shaft including a reduced diameter portion and a larger diameter portion, an inner ring slidably fitted.. over the reduced diameter portion of the spindle shaft, a plurality of balls interposed between a raceway formed on the outer peripheral surface of the inner ring and a raceway formed on the inner surface of the sleeve, and a plurality of balls interposed between a raceway formed on the outer peripheral surface of the larger diameter portion of the spindle shaft and a raceway formed on the inner peripheral surface of the sleeve, wherein the bearing is completed as the compound bearing by fixedly adhering the inner ring on the reduced diameter portion of the spindle shaft while applying to the balls an appropriate pre-load through the inner ring, and wherein the motor with the compound bearing is provided by connecting the spindle shaft of the compound ball bearing with the base, possibly integrally.

Further features of the present invention will become apparent to those skilled in the art to which the present invention relates from reading the following description of preferred embodiments which are described by way of example only with reference to the accompanying drawings, in which:
Fig. 1 is a vertical cross sectional view showing the first embodiment of the present invention;
Fig. 2 is a vertical cross sectional view showing the second embodiment of the present invention;
Fig. 3 is a vertical cross sectional view showing the third embodiment of the present invention;
Fig. 4 is a vertical cross sectional view showing the fourth embodiment of the present invention;
Fig. 5 is a vertical cross sectional view showing the fifth embodiment of the present invention;
Fig. 6 is a vertical cross sectional view showing the sixth embodiment of the present invention;
Fig. 7 is a partially sectioned elevational view showing a spindle motor of the prior art.

Embodiments of a motor with a compound bearing for OA devices in accordance with the present invention will now be described with reference to the attached drawings.

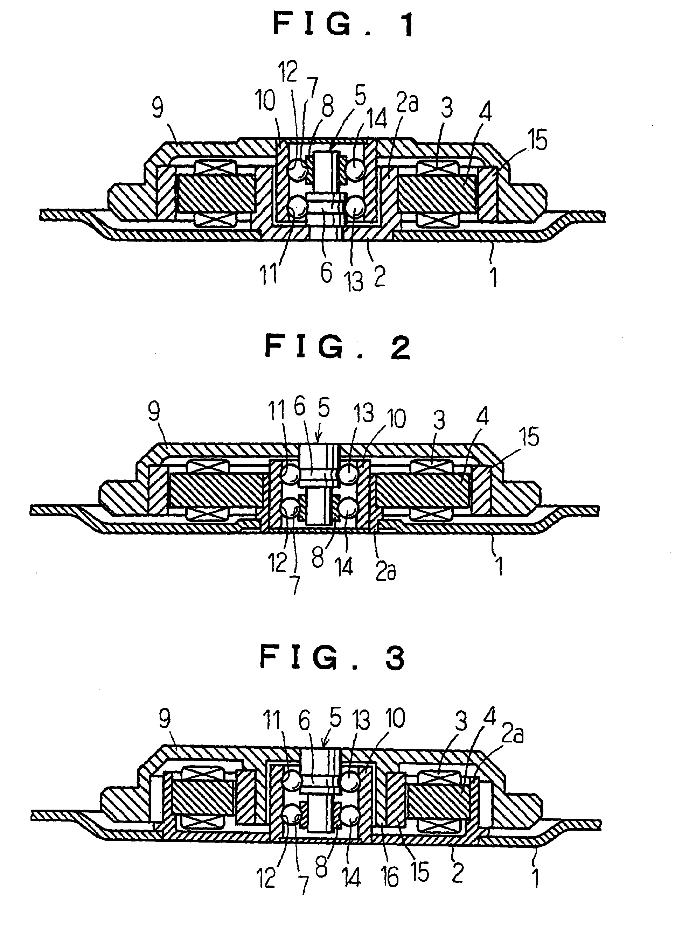

Shown in Figs. 1 and 2 are spindle motors of outer rotor type in accordance with the present invention.

As shown in Fig. 1, a base 2 having a flange 1 is connected integrally with a cylindrical yoke holder 2a of the same material. A stator yoke 4 including coils 3 is provided around the yoke holder 2a.

A lower end of a spindle shaft 5 of the finished compound ball bearing mentioned herein below is secured on the center of the base 2. A sleeve 10 of the compound ball bearing is connected to project from a lower surface of a hub 9 constituting a rotor of the motor at a central portion thereof. The hub and the sleeve are connected integrally with each other. The hub is rotatably journalled through the compound ball bearing around the spindle shaft.

The spindle shaft 5 of the compound ball bearing is a stepped shaft including a reduced diameter portion and a larger diameter portion. The larger diameter portion includes a raceway 6 formed directly thereon. An inner ring 8 having a raceway 7 formed over the outer periphery thereof is fitted around the reduced diameter portion.

A pair of parallel raceways 11 and 12 is formed on the inner surface of the sleeve 10 of the compound ball bearing. Each of these raceways corresponds with the raceway 6 formed on the larger diameter portion of the spindle shaft and the raceway 7 formed on the inner ring respectively. Balls 13 are interposed between the raceway 6 and the raceway 11, and balls 14 are interposed between the raceway 7 and the raceway 12.

When the above mentioned compound ball bearing is fabricated by the bearing maker, the inner ring 8 is fitted slidably over the reduced diameter portion of the spindle shaft 5, and the inner ring is fixedly adhered on the reduced diameter portion while applying an appropriate pre-load onto balls 13 and 14 through the inner ring. The compound ball bearing is adapted to be provided by the bearing maker as a finished product fabricated with high precision and an appropriate pre-load is applied.

The part to which reference numeral 15 is added is a magnet or magnets provided on the inner surface of the outer periphery of the hub so as to correspond with said yoke.

In the compound ball bearing in accordance with the second embodiment, the sleeve 10 is connected through the cylindrical stator yoke holder 2a to the central portion of the flange 1. The spindle shaft 5 is connected integrally so as to project from the lower surface of the hub 9 at the central portion therof. The compound ball bearing of this embodiment has an upside down structure with respect to that shown in Fig. 1 so that relative structural relationship between the raceway 6 of the spindle shaft, the inner ring 8 and its raceway 7, the raceways 11 and 12 formed on the sleeve, and balls 13 and 14 are the same as that of Fig. 1.

In the second embodiment, the stator yoke 4 is mounted around said sleeve 10 on the stator yoke holder 2a.

In such motors the shaft is often made of metallic material of high rigidity to prevent rotational run-out or play from occurring, and the hub is normally made of a light metal such as aluminium to give it a low inertia.

For example, the hub 9 may be employed as a disk supporting plate of a hard disk drive device. The embodiment of Fig. 2 will satisfy the above mentioned demand.

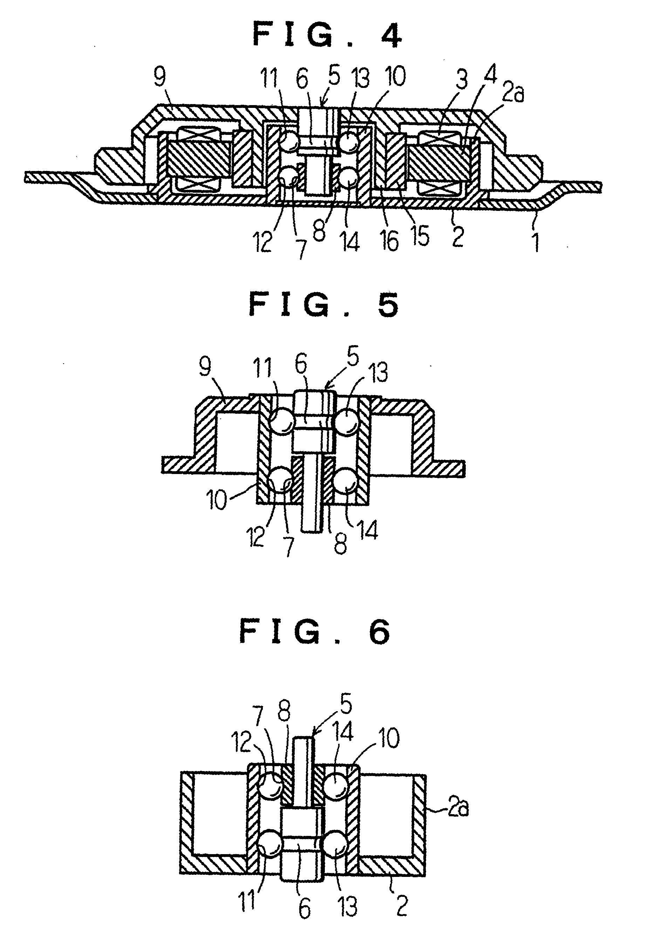

Spindle motors of inner rotor type will now be described with reference to Figs. 3 and 4.

In the motor of Fig. 3, the sleeve 10 is secured to a central portion of the bottom of the base 2 including the flange 1 around the outer periphery thereof, and the stator yoke 4 is provided on the inner surface of the stator yoke holder 2a.

In the motor of this embodiment, the hub 9 has at the lower surface thereof of the central portion a magnet holder 16 of the same material as the hub. A magnet or magnets are provided around the outer periphery of the magnet holder 16. The sleeve 10 of the compound ball bearing is situated inside the holder 16 to connect the hub and the sleeve with each other. The structure of the compound ball bearing itself is the same as that of Fig. 1.

In the motor of Fig. 4, the sleeve 10 of the compound ball bearing is integrally connected with the base 2 including the stator yoke holder 2a, the spindle shaft 5 is integrally connected with the hub 9, the stator yoke 4 is secured on the inner peripheral surface of the stator yoke holder 2a, and a magnet or magnets are provided around the outer periphery of the magnet holder 16 formed on the lower surface of the hub 9 at the central portion thereof of the same material as that of the hub.

A stepped shaft is used as the spindle shaft, and the structure of the compound ball bearing itself is the same as that of Fig. 2.

The motor of this embodiment is also suitable for a hard disk drive apparatus. When the hub is used as a disk supporting plate, although the shaft is made of a metallic material of high rigidity, the hub is made of a light metal of low inertia such as aluminum.

In the above mentioned embodiments, the inner surface (upper surface) of the flange is provided with a printed circuit board (not shown) corresponding to the coil 3 for driving a motor.

A variety of alternative embodiments in which the hub and/or base are connected with the sleeve and/or the spindle shaft of the compound ball bearing can be made. One of these alternative embodiments is described below in summary.

The structure shown in Fig. 5 has substantially the same structure as those illustrated in Figs. 1 and 3 in which the sleeve 10 of the compound ball bearing is connected integrally with the hub 9. However, the compound ball bearing is set upside down relative to those shown in Figs. 1 and 3.

The structure shown in Fig. 6 has substantially the same structure as that illustrated in Fig. 4 in which the sleeve 10 of the compound ball bearing is connected integrally with the base 2. However, the compound ball bearing is set upside down relative to that shown in Fig. 4.

The method for connecting the component parts with each other varies depending on the structure of the motor. These connecting methods include fit and bond under pressure, adhesion, welding, and so on.

With the structure of the present invention, the component parts of the compound ball bearing,such as the sleeve as well as the spindle shaft and the inner ring,are adapted to be connected integrally with the hub constituting a rotor and/or the base, so that the motor assembling operation can be effected easily by the motor maker, the assembling operation can be carried out efficiently by machine and the manufacturing cost can be reduced. These are the substantial advantages over the prior art.

With the embodiment claimed in claims 2 and 5, the necessity of centering the spindle shaft with respect to the hub or the base normally carried out by the motor maker is obviated, since the spindle shaft of the compound ball bearing is already connected integrally with the hub or the base. A motor of high rotational precision which has no rotational run-out can thus be obtained.

The spindle shaft of the compound ball bearing has a raceway formed directly on its larger diameter portion, so that there is no need for mounting an inner ring on the larger diameter portion.

Also the diameter of the larger diameter portion of the spindle shaft is large enough to enhance the rigidity and the strength of the spindle shaft. The motor's resistance against impact and resonance can thus be improved substantially.

In accordance with the present invention, the number of parts and the number of steps for assembling the parts can be reduced, since the sleeve of the compound ball bearing can be employed as an outer ring used commonly for a pair of ball bearings, and no inner ring is required on the larger diameter portion of the spindle shaft.

When manufacturing a motor for hard disk drive apparatus, it is necessary to form the parts such as the hub and the base of non-magnetic and light weight (low inertia) material such as aluminum. Whereas the material of high rigidity and strength, such as hardened ball bearing steel, is used for the spindle shaft or the sleeve. In accordance with the present invention, the hub and the base can be formed from different materials from that used for the spindle shaft or the sleeve, since the motor has a structure in which the hub or the base are adapted to be connected integrally with spindle shaft or the sleeve. This will enhance the range of applications for the present invention.

While particular embodiments of the present invention have been illustrated and described, it should be obvious to those skilled in the art that various changes and modifications can be made without departing from the scope of the invention.

## Claims

1. A motor with a compound bearing for an office automation device having a spindle shaft (5) assembled within a sleeve (10) of the bearing apparatus through balls (13, 14),
the bearing comprising:
the spindle shaft (5) formed as a stepped shaft including a reduced diameter portion and a larger diameter portion,
an inner ring (8) slidably fitted over the reduced diameter portion of the spindle shaft (5),
a plurality of balls (14) interposed between a raceway (7) formed on the outer peripheral surface of the inner ring (8) and a raceway (12) formed on the inner surface of the sleeve (10), and
a plurality of balls (13) interposed between a raceway (6) formed on the outer peripheral surface of the larger diameter portion of the spindle shaft (5) and a raceway (11) formed on the inner peripheral surface of the sleeve (10),
wherein the bearing is completed as the compound bearing by fixedly adhering the inner ring (8) on the reduced diameter portion of the spindle shaft (5) while applying to the balls (13, 14) an appropriate pre-load through the inner ring (8), and
wherein the motor with the compound bearing is provided by connecting the sleeve (10) of the compound ball bearing with the hub (9) constituting a rotor.

2. A motor with a compound bearing for an office automation device having a spindle shaft (5) assembled within a sleeve (10) of the bearing apparatus through balls (13, 14),
the bearing comprising:
the spindle shaft (5) formed as a stepped shaft including a reduced diameter portion and a larger diameter portion,
an inner ring (8) slidably fitted over the reduced diameter portion of the spindle shaft (5),
a plurality of balls (14) interposed between a raceway (7) formed on the outer peripheral surface of the inner ring (8) and a raceway (12) formed on the inner surface of the sleeve (10), and
a plurality of balls (13) interposed between a raceway (6) formed on the outer peripheral surface of the larger diameter portion of the spindle shaft (5) and a raceway (11) formed on the inner peripheral surface of the sleeve (10),
wherein the bearing is completed as the compound bearing by fixedly adhering the inner ring (8) on the reduced diameter portion of the spindle shaft (5) while applying to balls (13, 14) an appropriate pre-load through the inner ring (8), and
wherein the motor with the compound bearing is provided by connecting the spindle shaft (5) of the compound ball bearing with the hub (9) constituting a rotor.

3. A motor with a compound bearing for an office automation device having a spindle shaft (5) assemble within a sleeve (10) of the bearing apparatus through balls (13, 14),
the bearing comprising:
the spindle shaft (5) formed as stepped shaft including a reduced diameter portion and a larger diameter portion,
an inner ring (8) slidably fitted over the reduced diameter portion of the spindle shaft (5),
a plurality of balls (14) interposed between a raceway (7) formed on the outer peripheral surface of the inner ring (8) and a raceway (12) formed on the inner surface of the sleeve (10), and
a plurality of balls (13) interposed between a raceway (6) formed on the outer peripheral surface of the larger diameter portion of the spindle shaft (5) and a raceway (11) formed on the inner peripheral surface of the sleeve (10),
wherein the bearing is completed as the compound bearing by fixedly adhering the inner ring (8) on the reduced diameter portion of the spindle shaft (5) while applying to balls (13, 14) an appropriate per-load through the inner ring (8) and
wherein the motor with the compound bearing is provided by connecting the sleeve (10) of the compound ball bearing with a base (2).

4. A motor with a compound bearing for an office automation device having a spindle shaft (5) assembled within a sleeve (10) of the bearing apparatus through balls (13, 14),
the bearing comprising:
the spindle shaft (5) formed as a stepped shaft including a reduced diameter portion and a larger diameter portion,
an inner ring (8) slidably fitted over the reduced diameter portion of the spindle shaft (5),
a plurality of balls (14) interposed between a raceway (7) formed on the outer peripheral surface of the inner ring (8) and a raceway formed on the inner surface of the sleeve (10), and
a plurality of balls (13) interposed between a raceway (6) formed on the outer peripheral surface of the larger diameter portion of the spindle shaft (5) and a raceway (11) formed on the inner peripheral surface of the sleeve (10),
wherein the bearing is completed as the compound bearing by fixedly adhering the inner ring (8) on the reduced diameter portion of the spindle shaft (5) while applying to the balls (13, 14) an appropriate pre-load through the inner ring (8), and
wherein the motor with the compound bearing is provided by connecting the sleeve (10) of the compound ball bearing with a base (2) formed integrally with a stator yoke holder (2).

5. A motor with a compound bearing for an office automation device having a spindle shaft (5) assembled within a sleeve (10) of the bearing apparatus through balls (13, 14),
the bearing comprising:
the spindle shaft (5) formed as a stepped shaft including a reduced diameter portion and a larger diameter portion,
an inner ring (8) slidably fitted over the reduced diameter portion of the spindle shaft (5),
a plurality of balls (14) interposed between a raceway (7) formed on the outer peripheral surface of the inner ring (8) and a raceway (12) formed on the inner surface of the sleeve (10), and
a plurality of balls (13) interposed between a raceway (6) formed on the outer peripheral surface of the larger diameter portion of the spindle shaft (5) and a raceway (11) formed on the inner peripheral surface of the sleeve (10),
wherein the bearing is completed as the compound bearing by fixedly adhering the inner ring (8) on the reduced diameter portion of the spindle shaft (5) while applying to the balls (13, 14) an appropriate pre-load through the inner ring (8), and
wherein the motor with the compound bearing is provided by connecting the spindle shaft (5) of the compound ball bearing integrally with a base (2).
